# EUROPEAN PATENT SPECIFICATION

(11) **EP 1 758 454 B1**
(45) Date of publication and mention of the grant of the patent: **01.10.2008**
(21) Application number: 05755374.5
(22) Date of filing: 15.06.2005
(51) Int. Cl.: A01N 43/40, A01M 1/10

(54) **IMPROVED INSECT TRAP**
VERBESSERTE INSEKTENFALLE
PIEGE A INSECTES AMELIORE

(30) Priority: 23.06.2004 GB 0414021
(43) Date of publication of application: 07.03.2007
(73) Proprietor: Ye Olde Upton Delicatessen, 20 Old Street Upton Uppon Severn Worcestershire WR8 0HW (GB)
(72) Inventor: JULIER, Alan, James, Worcestershire WR13 5LT (GB)
(86) International application number: PCT/GB2005/002365
(87) International publication number: WO 2006/000752

(56) References cited:
- EP-A- 1 334 660
- WO-A-92/19101
- WO-A-94/00980
- US-A- 4 855 086

## Description

### Background of Invention.

The present invention relates to an environmental friendly way of destroying flying and crawling insects that are classed as pests. Most common of these are house flies, horse flies, blow flies, mosquitoes, cockroaches bugs and beetles and other crawling insects.

These pests are renowned for contaminating foods and spreading diseases in wild, domestic, agricultural animals, and birds, also of spreading diseases amongst human populations. Flies are also capable of transmitting bacterial pathogens such as Salmonella and Listeria to humans and animals. There is various prior art relating to this subject for trapping insects, such as sticky bait stations, high voltage electrocutes, electrostatic powders, magnetic powders, powder paralysing powders, all have disadvantages that with the exception of the high voltage trap, they will not kill the insects, they are left to die over a long period of time. A disadvantage of the high voltage trap, the insects tends to explode when electrocuted and splatter outside the trap and contaminate the area around the trap.

Other disadvantages of the above traps, some insects may crawl away and die together with associated contamination; the user of the trap has to kill the contents before they are disposed of.

There are other ways of killing insects by way of insecticide sprays, and aerosol sprays, these will eventually kill the insects but they fall and contaminate the area where they fall. And are harmful to the environment for wildlife and humans.

DDT is a good example.

US 4855086 teaches the insecticidal properties of piperine.

### Summery of Invention.

The present invention obviates the disadvantages in the above prior art comprises an apparatus, and an environmentally friendly powder, that is insoluble in water and not affected by humidity and ambient temperatures that demobilises insects and after a small period of time, the insects expire. It has been found by this invention that mill ground peppers particles also adhere to the cupules and cleaving balls of insects. The use of this demobilising powder adheres to the cupules and cleaving balls of the insect and they lose the ability to cling to a vertical or curved surface that is of a smooth and polished nature and will then fall into a catchments area of the designed apparatus. When the insect tastes the powder, its orientation is confused, the process of expiring becomes more rapid, and the insects lose the power of their legs and expire.

In carrying out the method of the present invention the insects are exposed to the powder particles which consists of a composition of piperine (C 17 H19 N03), powders, preferably milled white pepper, other peppers could be used with similar effect. Also the berries of Cubeba Clusii Miquel.

The pepper powders which are used in the method of the present invention may consist solely of the pepper particles.

Another advantage of milled white pepper is that it adheres to smooth surface when disturb by insects, wind, or shaking and has the effect of creating a second chamber in the designed apparatus, this effect makes a return hazard to insects, if there is a remote possibility of the insects wanting to try and escape back from the direction of which they had fallen. Also the disabling powder will also arrive in the catchments area by the trapped insects. It must be noted that the trapped insects have expired by the use of the disabling powder and do not have to be dispatched when the trap is empted for re-use. In the case of some crawling insects it is of advantage to place a small amount of environmentally acceptable pesticide or insecticide in the catchments area of the trap, such as, extract of basil, marigold root, and ground coca leaves together with their particular bait attraction.

Another embodiment of the invention, the design apparatus and powder can be used inside a building environment, and outside of a building. And if situated in close proximity near an outside light would increase capture of night flying insects, for example mosquitoes.

### Observation Experiment

The present invention involved a trial to determine the length of time, a common blowfly took to expire having made initial contact with the disabling particle powder.

A glass jar was given a light dusting of disabling particle powder. A blowfly was caught un- harmed and placed in the jar. When the blowfly came in contact with the disabling particle powder by walking across it, a timer was set and observations noted. After a few seconds, the blowfly could not cling to the sides of a vertical sided glass jar and started to launch itself into small flight jumps of a random nature. After 45 minutes the blowfly was on its back with its sensor rolling out After another 15 minutes the blowfly expired. The present invention was left in an outside environment for one week, and was still trapping flying insects. The trap consisted of flies only and found all to have expired, and no bees had entered, so the trap proved to be environmentally acceptable. 2. A method as claimed in claims1

## Claims

1. A method of controlling insects, such as crawling and flying insects by trapping and killing them, comprising using organic particles, wherein the organic particles are of a composition of piperine (C17 H19 N03), powders, and **characterized by** the use of a composition of milled pepper berries, that adhere to the insects cupules and cleaving balls, and an insect trap within which the said organic particles are placed

2. A method as claimed in claim 1 wherein the particles have an average particle size in the range 50 micron-300-micron.

3. A method as claim 2 wherein the particles will disable and kill the insects.

4. A method as claim 3 wherein the particles are insoluble, and are not affected by humidity, and ambient temperatures, and are environmentally acceptable.

5. A method as claimed in one of the preceding claims wherein the particles are applied to a surface in an area within the trap in which crawling and flying insects are present.

## Patentansprüche

1. Eine Methode, Kerbtiere, wie das Kriechen und fliegende Kerbtiere zu kontrollieren, Fallen stellend und sie tötend, das Verwenden organischer Partikeln umfassend, worin die organischen Partikeln von einer Zusammensetzung dessen sind piperine (C17 H19 N03), Puder, und charakterisiert durch den Gebrauch einer Zusammensetzung von gemahlenen Pfefferbeeren, die an den Kerbtier-Bechern und klebenden Bällen, und einem Kerbtier kleben, fangen whithin vorerwähnte organische Partikeln werden gelegt.

2. Eine Methode, wie gefordert, im Anspruch 1, worin die Partikeln eine durchschnittliche Partikel-Größe in der Reihe 50 Mikron-300 Mikron haben.

3. Eine Methode als Anspruch 2, worin die Partikeln zum Behinderten machen und die Kerbtiere töten werden.

4. Eine Methode als Anspruch 3, worin die Partikeln unlöslich sind, und durch die Feuchtigkeit, und Umgebungstemperaturen nicht betroffen werden, und ist umweltsmäßig annehmbar.

5. Eine Methode, wie gefordert, in einem der weitergehenden Ansprüche, worin die Partikeln auf eine Oberfläche in einem Gebiet angewandt werden, in dem das Kriechen und fliegende Kerbtiere anwesend sind.

## Revendications

1. Une méthode pour contrôler les insectes, insectes rampants et volants, en les attrapant et en les tuant, en utilisant des particules organiques, ces particules organiques étant composées de poudres de pipérine (C17 H19 N03), et **caractérisées par** l'utilisation d'une composition de baies de poivre moulues qui adhèrent aux cupules et *boules adhérentes* des insectes, et un piège à insectes dans lequel sont placées les particules organiques.

2. Une méthode comme stipulée dans l'article 1 selon laquelle les particules ont une taille moyenne de l'ordre de 50 à 300 microns.

3. Une méthode comme stipulée dans l'article 2 selon laquelle les particules mettent les insectes dans l'impuissance et les tuent.

4. Une méthode comme stipulée dans l'article 3 selon laquelle les particules sont insolubles, et ne sont affectées ni par l'humidité ni par la température ambiante, et sont écologiquement acceptables.

5. Une méthode comme stipulée dans l'un des articles précédents selon laquelle les particules sont appliquées à une surface à l'intérieur du piège dans lequel les insectes rampants et volants sont présents.
